# FASCICULE DE BREVET EUROPEEN

(11) **EP 0 941 501 B1**
(45) Date de publication et mention de la délivrance du brevet: **25.09.2002**
(21) Numéro de dépôt: 97948947.3
(22) Date de dépôt: 28.11.1997
(51) Int. Cl.: G03B 42/04

(54) **Appareil de radiographie avec une cassette de prise d'images**
Röntgengerät mit einer Bildaufnahmekassette
X-ray apparatus with an imaging cassette

(30) Priorité: 29.11.1996 FR 9614703
(43) Date de publication de la demande: 15.09.1999
(73) Titulaire: GE MEDICAL SYSTEMS SA, 78533 Buc Cedex (FR)
(72) Inventeur: HEIDSIECK, Robert, F-78150 Rocquencourt (FR); SALADIN, Jean-Pierre, F-92220 Bagneux (FR); MARIE, Alain, F-92140 Clamart (FR); PICARD, Catherine, F-92100 Boulogne-Billancourt (FR); BAUDET, Jean-Louis, F-75003 Paris (FR)
(74) Mandataire: Goode, Ian Roy
(86) Numéro de dépôt international: FR9702145
(87) Numéro de publication internationale: WO98023999

(56) Documents cités:
- EP-A- 0 603 709
- GB-A- 2 001 183
- US-A- 4 107 538
- US-A- 5 377 254

## Description

La présente invention concerne un un appareil de radiographie avec un dispositif de cassette de prise d'images numériques. De tels appareils de radiographie comprennent en général, un émetteur de rayons X, un dispositif de support de la cassette pour la prise d'images, l'organe à radiographier étant disposé entre l'émetteur de rayons X et le dispositif de support de la cassette, un moyen pour traiter les informations ainsi obtenues et un rangement de la cassette lorsque celle-ci n'est pas en service.

On connaît, par exemple, des appareils de mammographie qui comprennent une source de rayons X disposée d'un côté de l'organe à radiographier, une table de support transparente aux rayons X, disposée de l'autre côté de l'organe à radiographier, un plateau de maintien réglable venant appliquer l'organe sur la table de support et un logement pour recevoir une cassette de prise d'images contenant un film impressionnable. Le logement est disposé sous la table de support, et constitue un moyen de réception de la cassette. Après qu'une image de l'organe a été prise, la cassette contenant le film impressionné est extraite de son logement et le film est développé.

De tels appareils servent en général à la recherche d'éventuels symptômes de cancer du sein. Dans le but de réduire le temps d'immobilisation de la patiente, les cassettes contenant des films impressionnables peuvent être remplacées par des cassettes contenant un moyen de prise d'images numériques capable de réaliser une prise d'images extrêmement rapide. Les opérations de prise de vues, notamment lors d'une biopsie sont ainsi beaucoup plus brèves et réduisent l'inconfort de ces examens. De plus, les cassettes de prise d'images numériques permettent une amélioration de la qualité du diagnostic. Pour des raisons économiques, il est souhaitable d'utiliser des cassettes de prise d'images numériques sans changer le reste de l'appareil de radiologie. La cassette doit être amovible de façon à pouvoir être disposée, soit sous la table lors d'un diagnostic, soit dans le système de ponction lors d'une biopsie.

Une cassette de prise d'images numériques comprend une enveloppe à l'intérieur de laquelle est disposé un dispositif de détection du signal radiographique. Ce dispositif de détection peut, par exemple, comprendre un scintillateur capable de transformer les rayons X incidents, en rayonnement lumineux, une fibre optique permettant de filtrer la majeure partie du rayonnement X ayant traversé le scintillateur et protégeant les composants situés après ladite fibre optique, et une caméra matricielle à éléments de transfert de charge (CCD) formant une zone sensible. Pour assurer un positionnement satisfaisant dans un logement, on munit en général la cassette d'un moyen de verrouillage. La cassette est également munie d'un câble électrique la reliant à un moyen de traitement d'informations, en général un microordinateur. Des cassettes de prise d'images pour des appareils de radiographie sont décrites dans US 4,107,538 et EP 0 603 709.

Un appareil de mammographie est en général pourvu d'une table de support de hauteur réglable et une source de rayons X qui peut être basculée de ± 180° par rapport au plan vertical de symétrie de l'appareil. La table de support peut être remplacée par un système de ponction destiné à la biopsie et également pourvu d'un moyen de réception. Le système de ponction comprend un plateau de maintien jouant le rôle de pelote de compression, un porte-aiguille et une aiguille capable d'effectuer une biopsie dans l'organe à radiographier.

Le moyen de traitement d'informations peut être relié au système de ponction et à la cassette par des câbles électriques notamment pour traiter les informations reçues de la cassette et commander le système de ponction, en particulier, le déplacement du porte-aiguille lors de la biopsie. Le moyen de traitement d'informations est également capable de commander la source de rayons X et comprend un écran de visualisation des images de l'organe radiographié et un clavier. Le moyen de traitement d'informations peut être équipé d'un logiciel destiné aux calculs des coordonnées tridimensionnelles de points de l'organe à radiographier à partir de deux images prises selon des angles différents grâce au pivotement de la source de rayons X. On peut alors obtenir une excellente visualisation, soit de zones particulières de l'organe radiographié lors d'un diagnostic, soit du positionnement de l'aiguille dans l'organe radiographié lors d'une biopsie, en utilisant des méthodes d'affichage optimisées.

En fonctionnement, les rayons X sont émis par la source, traversent le plateau de maintien, l'organe radiographié, le plateau porte-sein, la paroi supérieure de la zone sensible de la cassette et passent dans le scintillateur lequel, à la réception de rayons X, émet de la lumière visible transférée à la caméra matricielle par la couche de fibres optiques. La caméra matricielle permet la transformation de l'information reçue sous forme de lumière visible en une information sous la forme d'un signal électrique numérique transmis au moyen de traitement d'informations.

Les cassettes numériques conventionnelles sont onéreuses et ne sont pas très aisées à manipuler en raison de leur forme plate et de leur attachement à un câble électrique relié au moyen de traitement d'informations. Une torsion du câble à proximité de la cassette ou un arrachement risque de provoquer des dommages importants à l'intérieur de ladite cassette. Le risque de chute est également à éviter. Par ailleurs, le positionnement précis et ferme de la cassette dans un logement n'est pas obtenu avec les cassettes conventionnelles en raison de la présence du câble. Or un positionnement précis est important pour la qualité des images obtenues, en évitant les flous, et pour la précision des calculs de positionnement pour les examens de biopsie.

La présente invention a donc pour objet un appareil de radiographie avec un dispositif de cassette de prise d'images qui remédie aux inconvénients ci-dessus, dont la préhension soit facile, dont le positionnement soit précis et dont la sortie du câble soit protégée.

Le dispositif de cassette de prise d'images, selon l'invention, est destiné à un appareil de radiographie du type comprenant un moyen de réception de cassettes mobiles. La cassette comprend une enveloppe de forme sensiblement parallélépipédique entourant un moyen de prise d'images. Le dispositif comprend un moyen formant poignée disposé sur une petite face de l'enveloppe, ledit moyen formant poignée étant pourvu d'une surface de butée d'insertion de la cassette dans le moyen de réception de l'appareil de radiographie. Le moyen formant poignée peut comprendre une surface de support du bras d'un patient radiographié, et une sortie de câble. Ainsi, le risque que la cassette glisse des mains d'un opérateur est fortement réduit. Une éventuelle torsion du câble à proximité de la cassette, ou une traction n'aura pas d'effets néfastes à l'intérieur de l'enveloppe, les efforts correspondants étant repris par le moyen formant poignée. Le bras de la patiente ne risque plus d'être directement en contact avec le câble.

Dans un mode de réalisation de l'invention, la surface de butée d'insertion est verticale, la cassette étant disposée dans le moyen de réception de l'appareil de radiographie, et est en contact avec une surface correspondante dudit appareil de radiographie, ledit moyen formant poignée étant disposé sur une face arrière de l'enveloppe dans le sens de l'insertion de la cassette. Le moyen formant poignée restant en saillie par rapport au moyen de réception, l'insertion de la cassette dans le moyen de réception par poussée sur le moyen formant poignée est très aisée.

Dans un mode de réalisation de l'invention, la surface de support est sensiblement horizontale.

Avantageusement, la sortie de câble comprend un conduit pourvu d'un premier orifice disposé sur une face inférieure de la poignée et d'un deuxième orifice débouchant à l'intérieur de l'enveloppe de la cassette. Le câble sort ainsi sous le moyen formant poignée et ne risque pas d'interférer avec le bras d'un patient.

Dans un mode de réalisation de l'invention, le dispositif comprend un moyen de verrouillage capable de se verrouiller après l'insertion de la cassette dans le moyen de réception de l'appareil de radiographie. On évite un éventuel arrachement de la cassette du moyen de réception notamment par traction sur le câble ou par chute due à la gravité.

De préférence, le moyen de verrouillage est disposé sur l'enveloppe et est capable de faire saillie du moyen de réception après l'insertion. Le moyen de verrouillage peut être rotatif.

De préférence, le moyen de verrouillage comprend un ressort agissant axialement en direction de l'enveloppe. Ainsi, on maintient la cassette en précontrainte au fond du moyen de réception.

Le moyen de verrouillage peut coopèrer avec le moyen de réception de façon qu'il effectue une translation simultanément à une rotation. Le moyen formant poignée peut comprendre une butée amovible.

Grâce à l'invention, le patient peut faire reposer son bras sur la poignée sans risque de déplacement de la cassette ou d'interférence avec le câble. L'invention sera mieux comprise à l'étude de la description détaillée d'un mode de réalisation pris à titre d'exemple nullement limitatif et illustré par les dessins annexés sur lesquels :
la figue 1 est une vue en perspective du dispositif selon l'invention;
la figure 2 est une vue de face en élévation du dispositif de cassette;
la figure 3 est une vue de dessus en élévation du dispositif de cassette;
la figure 4 est une vue de côté en élévation du dispositif de cassette;
la figure 5 est une vue en coupe transversale d'une variante de dispositif de cassette dans son moyen de réception; et
la figure 6 est une vue semblable à la figure 5, le dispositif de cassette étant en dehors du moyen de réception.

Comme on peut le voir sur les figures, la cassette 1 comprend une enveloppe 2 sensiblement parallélépipédique comprenant une face supérieure 3, une face inférieure 4, deux bords longitudinaux 5 et 6 et deux bords latéraux 7 et 8. Aux intersections entre le bord longitudinal 5 et le bord latéral 7 et entre le bord longitudinal 5 et le bord latéral 8 sont respectivement formés deux coins tronqués 9 et 10, tous deux perpendiculaires aux faces supérieure 3 et inférieure 4.

Sur le bord latéral 7 de l'enveloppe 2 de la cassette 1 est disposée une poignée 11 servant à la fois à la préhension de la cassette 1 par l'opérateur, à la protection du câble électrique 12 à sa sortie de la cassette 1, et à supporter éventuellement le bras du patient afin d'accroître le confort. Grâce à la poignée 11, un mouvement du câble 12 par rapport à l'enveloppe 2 n'entraîne pas de détérioration des contacts électriques de l'extrémité du câble 12 à l'intérieur de l'enveloppe 2. La poignée 11 reste toutefois de faible dimension pour ne pas gêner le patient pendant l'examen. Afin d'offrir une bonne préhension, la poignée 11 est de hauteur très largement supérieure à la hauteur de l'enveloppe 2. La poignée 11 comprend une face supérieure 13 sensiblement plane et offrant au patient la possibilité d'y reposer son bras lorsque l'appareil de mammographie est horizontal. La poignée 11 comprend aussi une face latérale 11a du côté opposé à l'enveloppe 2 et servant à supporter le bras du patient lorsque l'appareil de mammographie est incliné de 90°, la face latérale 11a étant alors horizontale. A l'opposé de la face supérieure 13, la poignée 11 comprend une face inférieure 14 qui est pourvue d'un orifice 15 de sortie du câble 12. La poignée 11 comprend également un orifice 16 communiquant avec l'intérieur de l'enveloppe 2 et par lequel passe le câble 12. Ainsi, si le câble 12 subit une traction ou une torsion, la poignée 11 assurera la stabilisation du câble 12 et empêchera tout mouvement de ce dernier à l'intérieur de l'enveloppe 2. On peut prévoir un câble 12 à section aplatie pour augmenter sa rigidité selon un axe de façon à le diriger vers une direction opposée au patient, par exemple à 45° par rapport à la verticale.

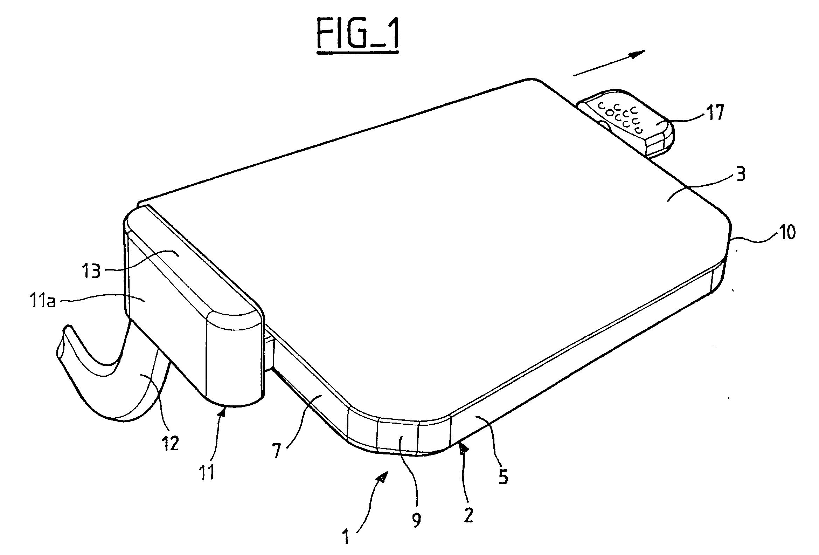

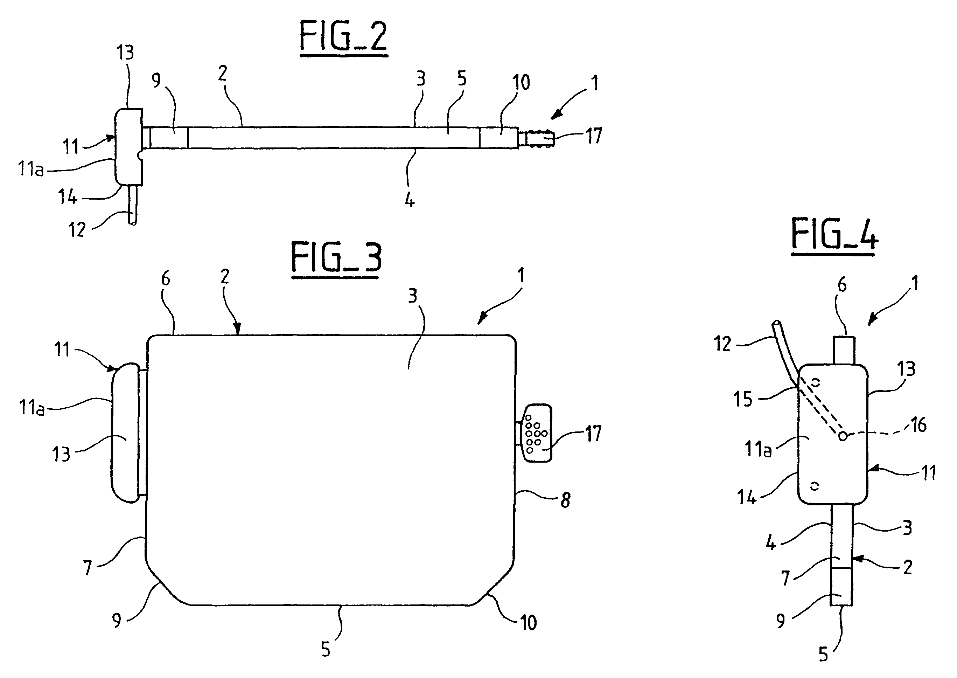

Sur le bord latéral 8 opposé au bord latéral 7, la cassette 1 comprend un verrou 17 pour assurer le blocage de la cassette 1 dans son logement prévu dans un plateau porte-sein, dans un système de positionnement ou dans un rangement. Le verrou 17 est monté rotatif autour d'un axe horizontal et parallèle aux bords longitudinaux 5 et 6. Sur les figures 1 à 4, le verrou 17 est représenté en position inactive ou déverrouillée. On voit que le verrou 17 est d'épaisseur inférieure ou égale à celle de l'enveloppe 2 afin de pouvoir insérer la cassette 1 dans un logement, dans le sens de la flèche représentée sur la figure 1, le verrou 17 entrant en premier dans le logement.

Le verrou 17 peut comprendre un capteur de verrouillage et un convertisseur analogique/numérique non représentés, qui envoient un signal numérique au moyen de traitement d'informations lorsque le verrouillage du verrou 17 est effectué ce qui peut permettre, par exemple, d'empêcher la prise d'un cliché tant que la cassette 1 n'est pas verrouillée de façon satisfaisante dans le logement d'un système de positionnement ou d'un plateau porte-sein. On évite ainsi une émission inutile de rayons X.

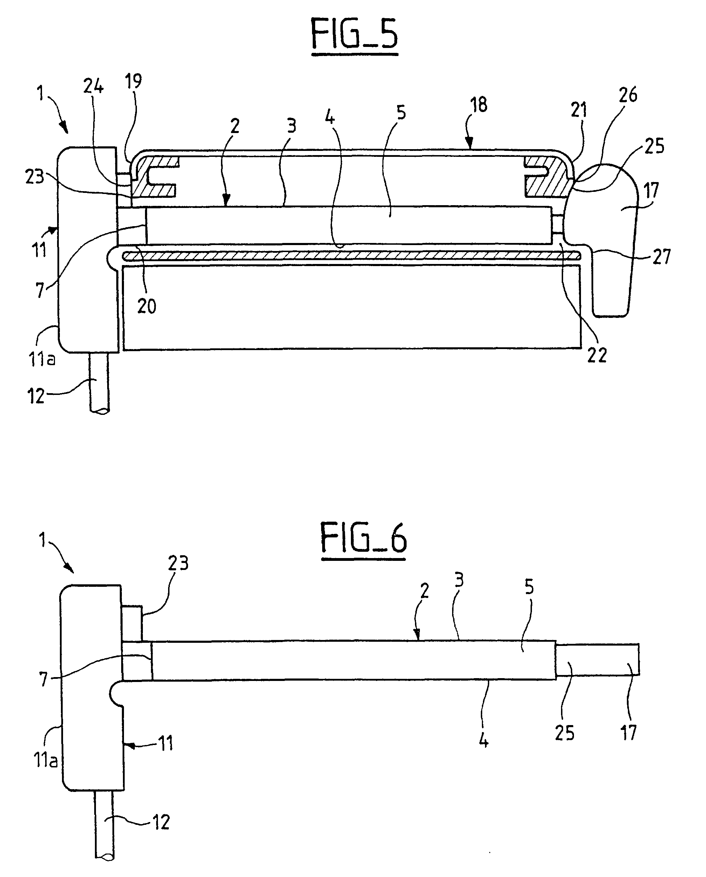

Sur la figure 5, la cassette 1 est disposée dans le logement d'un moyen de réception 18. Le moyen de réception 18 comprend une première face latérale 19 pourvue d'un orifice 20 d'entrée du logement et une deuxième face latérale 21 pourvue d'un orifice 22 de sortie du logement. La poignée 11, adjacente au bord latéral 7 de l'enveloppe 2 est pourvue d'une butée 23 en saillie du côté de l'enveloppe 2 et venant en contact avec une surface correspondante 24 de la première face latérale 19 du moyen de réception 18. La butée 23 est amovible de façon à pouvoir sélectionner son épaisseur selon les dimensions du moyen de réception.

Le verrou 17 monté rotatif est également mobile en translation par rapport à l'enveloppe 2. La retenue axiale du verrou 17 est assurée par un ressort, non représenté, disposé à l'intérieur de l'enveloppe 2 et qui exerce sur ledit verrou 17 une force tendant à le ramener vers l'enveloppe 2. Le verrou 17 comprend d'un côté une surface de verrouillage 25, arrondie et capable d'entrer en contact avec une surface correspondante 26 de la face latérale 21 du moyen de réception 18. A l'opposé de la surface de verrouillage 25, le verrou 17 comprend une échancrure 27 destinée à éviter tout contact entre ledit verrou 17 et le moyen de réception 18.

L'insertion d'une cassette 1 dans le logement d'un moyen de réception 18 s'effectue de la façon suivante. On prend la cassette 1 par poignée 11 en présentant tout d'abord le verrou 17 en position déverrouillée en face de l'orifice 20 de la première face latérale 19 du moyen de réception 18. On insère la cassette 1 dans le logement du moyen de réception 18 jusqu'à ce que la butée 23 de la poignée 11 soit en contact avec la surface correspondante 24 de la première face latérale 19. A cette étape, le verrou est dans la position illustrée par la figure 6 et fait saillie de l'orifice 22 de la deuxième face latérale 21. On tourne alors le verrou 17 d'environ 90° ce qui provoque le contact entre la surface arrondie de verrouillage 25 et la surface correspondante 26 de la deuxième face latérale 21 puis le glissement de la surface 25 sur la surface 26. La surface arrondie 25 sert alors de rampe et provoque un mouvement de translation du verrou 17 vers l'extérieur simultanément à sa rotation. A la fin de la rotation, le verrou 17 est dans la position verrouillée illustrée sur la figure 5 et la cassette 1 est mise en précontrainte contre la première face latérale 19 du moyen de réception 18 grâce au ressort du verrou 17. Afin d'assurer un maintien ferme de la cassette 1, on prévoit un effort de précontrainte de l'ordre de 10 à 70 N.

Grâce à cette possibilité de translation du verrou 17 par rapport à l'enveloppe 2 et à la sélection de l'épaisseur de la butée 23, la cassette 1 peut être utilisée avec des appareils de radiographie différents possédant des logements de cassettes dont les dimensions ne sont pas exactement identiques, tout en assurant une bonne visée du rayonnement X pour n'irradier que les zones de l'organe dont l'image est captée par la cassette. On accroît ainsi la facilité d'utilisation de la cassette. Le moyen de verrouillage évite également une chute de la cassette en dehors de son logement due, par exemple, à une inclinaison de la source de rayons X et du moyen de réception pour effectuer certains examens.

La forme arrondie de la surface de verrouillage 25 du verrou 17 permet à l'opérateur de déplacer le verrou 17 en translation lors de la rotation et ce sans avoir à appliquer un effort de traction sur le verrou 17. Cette forme arrondie tend également à plaquer la cassette 1 vers le bas contre les parois de son logement ce qui accroît encore la précision du positionnement de la cassette 1 par rapport audit logement.

Grâce à l'invention, on dispose d'un appareil de radiographie avec une cassette de prise d'images numériques de préhension facile, de sécurité de fonctionnement accrue et de grande longévité. Le positionnement mécanique de la cassette garantit la précision des images et l'absence de flou dû à des mouvements non souhaités de la cassette.

## Revendications

1. Un appareil de radiographie comprenant un moyen de réception de cassettes mobiles, et une cassette (1) de prise d'images comprenant une enveloppe (2) de forme sensiblement parallélépipédique entourant un moyen de prise d'images, et un moyen formant poignée (11) disposé sur une petite face latérale de l'enveloppe, **caractérisé par le fait que** ledit moyen formant poignée est pourvu d'une surface de butée d'insertion de la cassette dans le moyen de réception de l'appareil de radiographie.

2. Un appareil de radiographie selon la revendication 1, **caractérisé par le fait que** le moyen formant poignée comprend une surface de support (11a, 13) du bras d'un patient radiographié, et une sortie de câble (12).

3. Un appareil de radiographie selon la revendication 1 ou 2, **caractérisé par le fait que** la surface de butée d'insertion est verticale, la cassette étant disposée dans le moyen de réception de l'appareil de radiographie, et est en contact avec une surface correspondante dudit appareil de radiographie, ledit moyen formant poignée étant disposé sur une face arrière de l'enveloppe dans le sens de l'insertion de la cassette.

4. Un appareil de radiographie selon la revendication 2, **caractérisé par le fait que** la surface de support (11a, 13) est sensiblement horizontale.

5. Un appareil de radiographie selon la revendication 2, **caractérisé par le fait que** la sortie de câble (12) comprend un conduit pourvu d'un premier orifice (15) disposé sur une face inférieure de la poignée et d'un deuxième orifice (16) débouchant à l'intérieur de l'enveloppe de la cassette.

6. Un appareil de radiographie selon l'une quelconque des revendications précédentes, **caractérisé par le fait que** la cassette comprend un moyen de verrouillage (17) capable de se verrouiller après l'insertion de la cassette dans le moyen de réception de l'appareil de radiographie.

7. Un appareil de radiographie selon la revendication 6, **caractérisé par le fait que** le moyen de verrouillage est disposé sur l'enveloppe et est capable de faire saillie du moyen de réception après l'insertion.

8. Un appareil de radiographie selon la revendication 6 ou 7, **caractérisé par le fait que** le moyen de verrouillage est rotatif.

9. Un appareil de radiographie selon l'une quelconque des revendications 6 à 8, **caractérisé par le fait que** le moyen de verrouillage comprend un ressort agissant axialement en direction de l'enveloppe.

10. Un appareil de radiographie selon l'une quelconque des revendications 5 à 9, **caractérisé par le fait que** le moyen de verrouillage coopère avec le moyen de réception de façon qu'il effectue une translation simultanément à une rotation.

11. Un appareil de radiographie selon l'une quelconque des revendications précédentes, **caractérisé par le fait que** le moyen formant poignée comprend une butée amovible.

## Patentansprüche

1. Eine Vorrichtung zur Radiografie umfassend ein Mittel zur Aufnahme von mobilen Kassetten; eine Kassette (1) zur Bildaufnahme, die ein Gehäuse (2) mit im wesentlichen parallelepipedischer Form umfasst und die ein Bildaufnahmemittel umgibt; und ein einen Handgriff (11) bildendes Mittel, das auf einer kleinen lateralen Oberfläche des Gehäuses angebracht ist; **dadurch gekennzeichnet dass** besagtes einen Handgriff (11) bildende Mittel mit einer Anschlagfläche zum Einführen der Kassette in das Aufnahmemittel der Radiografievorrichtung versehen ist.

2. Eine Radiografievorrichtung nach dem Anspruch 1, **dadurch gekennzeichnet dass** das einen Handgriff bildende Mittel eine Stützfläche (11a, 13) für den Arm eines zu radiografierenden Patienten und einen Kabelauslass (12) umfasst.

3. Eine Radiografievorrichtung nach dem Anspruch 1 oder 2, **dadurch gekennzeichnet dass** die Anschlagfläche zum Einführen vertikal ist, wobei die Kassette in dem Aufnahmemittel der Radiografievorrichtung angebracht und in Kontakt mit einer korresponierenden Fläche der besagten Radiografievorrichtung ist, wobei das einen Handgriff bildende Mittel auf einer in der Einführungsrichtung der Kassette hinteren Fläche angebracht ist.

4. Eine Radiografievorrichtung nach dem Anspruch 2, **dadurch gekennzeichnet dass** die Stützfläche (11a, 13) im wesentlichen horizontal ist.

5. Eine Radiografievorrichtung nach dem Anspruch 2, **dadurch gekennzeichnet dass** der Kabelauslass (12) eine Leitung umfasst, die versehen ist mit einer ersten Öffnung (15), die auf einer unteren Fläche des einen Handgriff bildenden Mittels angebracht ist, und einer zweiten Öffnung (16), die ins Innere des Gehäuses der Kassette mündet.

6. Eine Radiografievorrichtung nach einem der vorhergehenden Ansprüche, **dadurch gekennzeichnet dass** die Kassette ein Verriegelungsmittel (17) umfasst, das sich nach dem Einführen der Kassette in das Aufnahmemittel der Radiografievorrichtung verriegelt.

7. Eine Radiografievorrichtung nach dem Anspruch 6, **dadurch gekennzeichnet dass** das Verriegelungsmittel auf dem Gehäuse angebracht ist und nach dem Einführen aus dem Aufnahmemittel auskragen kann.

8. Eine Radiografievorrichtung nach dem Anspruch 6 oder 7, **dadurch gekennzeichnet dass** das Verriegelungsmittel drehend ist.

9. Eine Radiografievorrichtung nach einem der Ansprüche 6 bis 8, **dadurch gekennzeichnet dass** das Verriegelungsmittel eine axial in Richtung des Gehäuses wirkende Feder umfasst.

10. Eine Radiografievorrichtung nach einem der Ansprüche 5 bis 9, **dadurch gekennzeichnet dass** das Verriegelungsmittel mit dem Aufnahmemittel derart zusammenwirkt, dass es eine Verschiebung gleichzeitig mit einer Drehung ausführt.

11. Eine Radiografievorrichtung nach einem der vorhergehenden Ansprüche, **dadurch gekennzeichnet dass** einen Handgriff bildende Mittel einen abnehmbaren Anschlag umfasst.

## Claims

1. A radiography apparatus comprising a means for receiving mobile cassettes; an image acquisition cassette (1) comprising a casing (2) of substantially parallelepipedal shape, surrounding an image acquisition means; and a means which forms a handle (11) and is arranged on a small lateral face of the casing; **characterized in that** said means which forms a handle is provided with a stop surface for insertion of the cassette into the reception means of the radiography apparatus.

2. A radiography apparatus according to the claim 1, **characterized in that** the means which forms a handle comprises a surface (11a, 13) for supporting the arm of a patient being radiographed, and a cable outlet (12).

3. A radiography apparatus according to the claim 1 or 2, **characterized in that** the stop surface for insertion is vertical, the cassette being arranged in the reception means of the radiography apparatus, and is in contact with a corresponding surface of the radiography apparatus, said means which forms a handle being arranged on a face which is to the rear of the cassette in the cassette insertion direction.

4. A radiography apparatus according to the claim 1 or 2, **characterized in that** the support surface (11a, 13) is substantially horizontal.

5. A radiography apparatus according to the claim 2, **characterized in that** the cable outlet comprises a conduit provided with a first orifice (15) arranged on a lower face of the handle and a second orifice (16) opening into the interior of the casing of the cassette.

6. A radiography apparatus according to anyone of the preceding claims, **characterized in that** the cassette comprises a locking means (17), which can be locked after the cassette has been inserted into the reception means of the radiography apparatus.

7. A radiography apparatus according to the claim 6, **characterized in that** the locking means is arranged on the casing and can protrude from the reception means after the insertion.

8. A radiography apparatus according to the claim 6 or 7, **characterized in that** the locking means is rotary.

9. A radiography apparatus according to anyone of the claims 6 to 8, **characterized in that** the locking means comprises a spring acting axially in the direction of the casing.

10. A radiography apparatus according to anyone of the claims 5 to 9, **characterized in that** the locking means interacts with the reception means so that it executes a translation simultaneously with a rotation.

11. A radiography apparatus according to anyone of the preceding claims, **characterized in that** the means which forms a handle comprises a removable stop.
